# EUROPÄISCHE PATENTSCHRIFT

(11) **EP 4 179 466 B1**
(45) Veröffentlichungstag und Bekanntmachung des Hinweises auf die Patenterteilung: **02.09.2026**
(21) Anmeldenummer: 21742042.1
(22) Anmeldetag: 07.07.2021
(51) Int. Cl.: G06K 19/077

(54) **VERFAHREN ZUM TESTEN EINES CHIPKARTENKÖRPERS**
METHOD FOR TESTING A CHIP CARD ELEMENT
PROCÉDÉ DE TEST D'UN ÉLÉMENT DE CARTE À PUCE

(30) Priorität: 09.07.2020 DE 102020004144
(43) Veröffentlichungstag der Anmeldung: 17.05.2023
(73) Patentinhaber: Giesecke+Devrient ePayments GmbH, 81677 München (DE)
(72) Erfinder: BALDISCHWEILER, Michael, 81825 München (DE)
(74) Vertreter: Giesecke+Devrient IP
(86) Internationale Anmeldenummer: PCT/EP2021/025247
(87) Internationale Veröffentlichungsnummer: WO 2022/008099

(56) Entgegenhaltungen:
- WO-A1-2019/245072
- US-A1- 2012 312 879
- US-A1- 2018 339 503
- US-A1- 2020 151 534

## Beschreibung

Die vorliegende Erfindung betrifft ein Verfahren zum Testen eines Kartenkörpers mit einer metallischen Kernschicht für eine kontaktlose oder Dual-Interface Chipkarte sowie ein Verfahren zum Herstellen einer entsprechenden kontaktlosen oder Dual-Interface Chipkarte.

Eine kontaktlose oder Dual-Interface Chipkarte umfasst einen Kartenkörper, einen Chip und eine mit dem Chip gekoppelte Antennenspule. Die Antennenspule befindet sich entweder in einem Chipmodul, welches den Chip umfasst oder im Kartenkörper. Ein herkömmlicher Kartenkörper ist aus thermoplastischem Material, wie zum Beispiel PVC, PET, PETG oder ABS, hergestellt, die jedoch bisweilen anfällig für Risse und Brüche sind. Beispielsweise kann die Chipkarte in einer Hosentasche durch Torsion brechen.

Im Vergleich zu den herkömmlichen Kartenkörpern weist ein Kartenkörper mit einer metallischen Kernschicht aufgrund ihrer relativ größeren Resistenz gegen Torsion eine erhöhte Lebensdauer auf. Darüber hinaus fühlt sich die metallische Chipkarte im Hinblick auf ihr Gewicht hochwertig und robust an. Durch das Integrieren der metallischen Kernschicht in den Kartenkörper wird die Kontaktlosfunktion der Chipkarte allerdings wesentlich gedämpft, sodass der Schaltabstand zwischen der Chipkarte und einem Kartenlesegerät sinkt. Dies liegt daran, dass das Metallmaterial allgemein elektromagnetische Wellen abschirmt. Denn die von dem Kartenlesegerät an die Chipkarte mittels elektromagnetischer Wellen übertragene Energie wird teilweise von der metallischen Kernschicht absorbiert und reflektiert. Insbesondere wenn die Chipkarte sich in einem wechselnden Magnetfeld des Kartenlesegerätes befindet, bewegen sich Elektronen der metallischen Kernschicht entlang einer Fließrichtung um das Chipmodul herum, sodass ein Wirbelstrom durch die Bewegung der Elektronen entsteht. Durch den entstandenen Wirbelstrom geht einerseits die übertragene Energie als Wärme verloren, was auch als "Absorbieren" bezeichnet wird, und anderseits wird ein Eigenmagnetfeld erzeugt, das einer Änderung des wechselnden Magnetfelds, das es erzeugt hat, entgegenwirkt, was auch als "Reflektieren" bezeichnet wird. Da durch den Wirbelstrom die übertragene Energie mehr oder weniger verloren geht, führt dies dazu, dass die verbleibende Energie, die von dem Chipmodul zur Kontaktloskommunikation tatsächlich genutzt werden kann, entsprechend kleiner ist als die übertragene Energie, d. h. dass der Schaltabstand aufgrund des Wirbelstroms reduziert werden muss. Falls die verbleibende Energie kleiner als ein Schwellenwert, beispielsweise 2 V, ist, welcher für die Schaltung des Chipmoduls entscheidend ist, funktioniert die Chipkarte nicht.

Um dem Dämpfungseinfluss der metallischen Kernschicht zu begegnen, sind verschiedene Herstellungsverfahren bekannt. US 2016/0110639 A1 offenbart eine Chipkarte, welche einerseits ein Chipmodul mit einem Chip und einer Modulantenne und anderseits eine metallische Kartenkörperkernschicht mit einer Kavität zur Aufnahme des Chipmoduls und einem Schlitz oder nichtleitenden Streifen umfasst. Der Schlitz oder nichtleitende Streifen überlappt die Modulantenne und erstreckt sich von dem Chipmodul zu einem äußeren Rand der metallischen Kartenkörperkernschicht. Er dient gewissermaßen zur Minderung des oben genannten Dämpfungseinflusses und zur Vergrößerung des gesunkenen Schaltabstandes, indem der Fluss der Elektronen der metallischen Kartenkörperkernschicht unterbrochen wird. Da der ursprünglich geschlossene Wirbelstromkreis um das Chipmodul zerstört wird und kein Wirbelstrom in der Umgebung des Chipmoduls mehr entstehen kann, wird die für die Funktionalität des Chipmoduls zur Verfügung stehende Energie entsprechend erhöht. Einerseits sollte der Schlitz so weit wie möglich sein, um den Wirbelstrom effektiv zu verhindern, und andererseits sollte der Schlitz im Hinblick auf die mechanische Stabilität der Chipkarte so schmal wie möglich sein. Der Schlitz kann zum Beispiel mittels eines Lasers geschnitten oder chemisch geätzt werden. Um die Stabilität der Chipkarte zu verstärken, kann der Schlitz zumindest teilweise mit einem elektrisch nicht leitenden Polymer, Epoxidharz oder Verstärkungsepoxidharz gefüllt werden.

Wichtig ist, dass beim Schneiden oder Ätzen kein Metallmaterial im Schlitz verbleibt. Ein verbleibender Teil des Metallmaterials kann einen Teilschluss oder sogar einen Vollschluss in der durchgängigen Öffnung des Schlitzes verursachen, welcher die Wirksamkeit des Schlitzes entsprechend herabsetzt. Die metallische Kartenkörperkernschicht wird regelmäßig mit mindestens einer weiteren Deckschicht laminiert. Während des Laminierens entstehen möglicherweise wiederum Verunreinigungen oder ein Teilschluss oder sogar Vollschluss im Schlitz. So kann es vorkommen, dass aufgrund des hohen Drucks ein zunächst sauberer, dünner Schlitz durch Verzug zusammengedrückt wird und einen Kontakt bildet. Solche Chipkarten sind dann nicht funktionsfähig. Aufgrund der vorhandenen Deckschicht ist der Schlitz jedoch zur Überprüfung nicht mehr zugänglich. Erst bei der finalen Prüfung der fertigen Chipkarte wird ein solcher Mangel festgestellt.

US 2020/151534 A1 offenbart ebenfalls eine Chipkarte, die eine metallische Kernschicht mit einer Kavität zum Anordnen eines Chipmoduls in der Kavität und einem Schlitz aufweist, der sich von der Kavität bis zu einem Rand der metallischen Kernschicht erstreckt. Das Chipmodul hat einen Chip und eine mit dem Chip gekoppelte Antenne und ist in der Kavität angeordnet. Eine ähnliche Chipkarte ist auch aus US 2018/339503 A1 bekannt

In US 2012/312879 A1 ist ein RFID-Transponder beschrieben, der als Antwort auf ein niederfrequentes Aktivierungssignal ein hochfrequentes Identifikationssignal sendet, das dazu dient, den Transponder zu identifizieren.

Ein Verfahren zur Herstellung einer Chipkarte mit einer metallischen Außenschicht offenbart WO 2019/245072 A1.

Herkömmliche Verfahren zum Testen der Kontaktlosfunktion einer kontaktlosen oder Dual-Interface Chipkarte mit einem thermoplastischen Kartenkörper umfassen mehrere Schritte, darunter einen initialen Schritt zum Testen des Chipmoduls z. B. gemäß EP 2779031 B1 und einen finalen Schritt zum Testen des Endprodukts, nämlich der Chipkarte. Beim initialen Testen des Chipmoduls gemäß dem Verfahren nach EP 2779031 B1 wird im Wesentlichen geprüft, ob die Antennenspule des Chipmoduls einen Bruch aufweist und/oder ob zwei oder mehr Windungen der Antennenspule versehentlich kurzgeschlossen sind. Versuche haben gezeigt, dass man beim Testen des Endprodukts auf indirektem Wege auch feststellen kann, ob sich in dem Schlitz der metallischen Kernschicht des Kartenkörpers ein Teil- oder Vollschluss ergeben hat, indem man nämlich die Kontaktlosfunktion der Chipkarte noch einmal prüft. Ist die Kontaktlosfunktion der Chipkarte zu schwach, so ist dies auf einen mangelhaften Schlitz zurückzuführen und es wird die gesamte Chipkarte entsorgt.

Aufgabe der vorliegenden Erfindung ist es, die Herstellungskosten von kontaktlosen oder Dual-Interface Chipkarten zu senken.

Diese Aufgabe wird durch ein Verfahren mit den Merkmalen des unabhängigen Anspruchs gelöst. Ausgestaltungen und Weiterbildung der Erfindung sind in den abhängigen Ansprüchen angegeben.

Ein Grundgedanke der vorliegenden Erfindung besteht darin, die Funktionalität des Kartenkörpers zu testen, bevor das oder ein Chipmodul in die Kavität des Kartenkörpers fixiert wird. Ein Kartenkörper, welcher Verunreinigungen, einen Teilschluss oder Vollschluss im Schlitz seiner metallischen Kernschicht aufweist, fällt im Test durch und wird gar nicht erst zum Fixieren des Chipmoduls und zu folgenden Herstellungsschritten benutzt. Durch das vorbeugende Herausfiltern aller Kartenkörper mit defekter metallischen Kernschicht werden nur noch funktionsfähige Kartenkörper mit Chipmodulen versehen. Als Ausschuss fallen daher die Kartenkörper mit defekter metallischen Kernschicht ohne Chipmodule an und nicht mehr Kartenkörper mit Chipmodulen. So lassen sich die durch Ausschuss bedingten Kosten senken.

Gemäß einem ersten Aspekt der Erfindung beginnt das Verfahren mit dem Bereitstellen eines Kartenkörpers mit metallischer Kernschicht, wobei die metallische Kernschicht eine Kavität zum Fixieren des Chipmoduls in einer Fixierlage in der Kavität und einen Schlitz, der sich von der Kavität bis zu einem Rand des Kartenkörpers erstreckt, aufweist. Das Chipmodul umfasst einen Schwingkreis, welcher einen Chip, insbesondere einen RFID- oder NFC-Chip, und eine mit dem Chip gekoppelte Antennenspule, insbesondere eine induktiv koppelnde und planare Antennenspule mit mindestens einer Windung, umfasst. Zunächst wird das Chipmodul, welches später Teil der Chipkarte werden soll, oder ein anderes, nur zum Testen verwendetes Chipmodul, in oder über einer Fixierlage in der Kavität positioniert, vorzugsweise bis zu einem Abstand von 3 mm senkrecht über der Fixierlage. Danach wird der Schwingkreis getestet, d. h. noch vor dem tatsächlichen Fixieren des Chipmoduls in der Kavität.

Das Chipmodul wird vorzugsweise mit einem Messkopf einer Testvorrichtung verbunden und kann in oder über der Fixierlage in der Kavität mittels des Messkopfs positioniert werden. Das ermöglicht es, mit bestehenden Chipmodul-Testvorrichtungen zu arbeiten, die lediglich so angepasst werden müssen, dass das Chipmodul an den Messkopf angebracht werden kann. Alternativ kann der zu testende Kartenkörper an den mit dem Chipmodul bestückten Messkopf herangeführt werden.

Zum Testen der Funktionalität des Schwingkreises des Chipmoduls kann die Testvorrichtung einen einzelnen Strompuls erzeugen, vorzugsweise einen Gleichstrompuls in Form des Dirac-Stoßes, welcher entsprechend ein gepulstes Magnetfeld erzeugt. Denn ein stationärer Gleichstrom könnte die Antennenspule des Chipmoduls thermisch überlasten. Mittels des gepulsten Magnetfelds wird der Schwingkreis des Chipmoduls kontaktlos angeregt und beginnt zu schwingen. Da der Schwingkreis des Chipmoduls normalerweise Widerstandskomponenten umfasst, durch welche Energieverluste entstehen, und der Gleichstrompuls in Form des Dirac-Stoßes die Energieverluste nicht ausgleicht, ist die Schwingung tatsächlich eine abklingende Schwingung. Die Schwingung kann entweder einem Strom oder einer Spannung des Schwingkreises entsprechen und das Abklingen der Schwingung wird, d. h. das Abklingen des Stroms oder das Abklingen der Spannung des Schwingkreises, mittels der Testvorrichtung erfasst.

Anhand des erfassten Abklingens der Schwingung kann eine Güte Q mittels der Testvorrichtung bestimmt werden. Eine hohe Güte Q bedeutet eine langsamere Geschwindigkeit der Energieverluste im Schwingkreis und eine längere Dauer des Abklingens der Schwingung. Die Güte Q kann aus zwei aufeinander folgenden Schwingungsamplituden des Abklingens der Schwingung ermittelt werden. Je kleiner eine Differenz zwischen den zwei aufeinander folgenden Schwingungsamplituden ist, desto größer ist die Güte Q. Um die Schwingungsamplituden des Abklingens zu erfassen, kann die Testvorrichtung einen integrierten Oszillograph umfassen, welcher den Zeitverlauf des abklingenden Stroms oder der abklingenden Spannung anzeigt und/oder an dem sich die einzelnen Werte ablesen lassen. Vorteilhaft wird die Güte Q mit einem bekannten Referenzwert verglichen, welcher beispielsweise mittels einer Referenzchipkarte bestimmt oder als durchschnittlicher Wert aus den einzelnen Güten einer Vielzahl von Chipkarten berechnet wurde. Die Referenzchipkarte kann ebenfalls eine kontaktlose oder eine Dual-Interface Chipkarte mit einer metallischen Kernschicht sein, die eine bereits festgestellte durchgängige Schlitzöffnung aufweist. Letztlich wird entschieden, ob das zum Testen verwendete oder ein entsprechendes Chipmodul in der Kavität in der Fixierlage fixiert werden soll. Zum Beispiel wird der Kartenkörper nicht verwendet, wenn die Güte Q kleiner als der Referenzwert ist. Anderenfalls wird das zum Testen verwendete oder ein anderes Chipmodul in der Fixierlage in der Kavität fixiert. Neben oder anstelle der Güte Q können andere Parameter, wie z. B. ein maximaler Schaltabstand, bestimmt werden.

Testergebnisse haben gezeigt, dass der Abstand zwischen dem Chipmodul und der Fixierlage in der Kavität das Abklingen der Schwingung sowie die Güte Q beeinflusst und diese Beeinflussung bis zu einem Abstand von 3 mm linear ist. Dies bedeutet, dass die Funktionalität des Schwingkreises relativ einfach getestet werden kann, solange das Chipmodul nicht mehr als 3 mm relativ zur Fixierlage, vorzugsweise senkrecht über der Fixierlage, positioniert wird, d. h. ohne dass das Chipmodul in der Kavität zu werden braucht.

Der Schlitz wird vorzugsweise mit einer Breite zwischen 30 µm und 80 µm, besondere bevorzugt zwischen 50 µm und 80 µm hergestellt. Anschließend wird die metallische Kernschicht mit mindestens einer Deckschicht laminiert, und schließlich wird die Kavität nicht nur in der metallischen Kernschicht sondern auch in der mindestens einen Deckschicht erzeugt. Die Kavität wird so eingebracht, dass sie an den Schlitz angrenzt. Soweit der Schlitz noch nicht bis zu einem Rand der metallischen Kernschicht heranreicht, wird die laminierte metallische Kernschicht so getrimmt, beispielsweise durch Stanzen, dass sich der Schlitz bis zu einem Rand der metallischen Kernschicht erstreckt. Die Deckschicht kann zum Beispiel eine transparente Deckschicht und/oder eine Schicht mit gedrucktem Muster und/oder eine beliebige andere Schicht sein. Sie kann insbesondere Sicherheitsmerkmale aufweisen.

Anstatt einzelner metallischer Kernschichten kann ein metallischer Mehrbenutzenbogen für eine Vielzahl von kontaktlosen oder Dual-Interface Chipkarten bereitgestellt werden, wobei der metallische Mehrbenutzenbogen eine entsprechende Vielzahl von metallischen Kernschichten umfasst, in denen eine Vielzahl von Schlitzen und eine Vielzahl von Kavitäten erzeugt werden, sodass jede metallische Kernschicht der Vielzahl von metallischen Kernschichten des metallischen Mehrbenutzenbogens mindestens einen Schlitz und eine Kavität umfasst und bei jeder metallischen Kernschicht der mindestens eine Schlitz sich von der entsprechenden Kavität entweder zu einem Rand des metallischen Mehrbenutzenbogens oder zu mindestens einer Schnittlinie erstreckt, entlang der die metallische Kernschicht aus dem metallischen Mehrbenutzenbogen in einem weiteren Schritt herausgetrennt wird.

Nachdem der metallische Mehrbenutzenbogen mit mindestens einer Deckschicht laminiert worden ist, kann entsprechend die Vielzahl von Kavitäten nicht nur in dem metallischen Mehrbenutzenbogen, sondern auch in der mindestens einen Deckschicht, erzeugt werden.

Ein zweiter Aspekt der Erfindung betrifft das Herstellen einer kontaktlosen oder einer Dual-Interface Chipkarte unter Verwendung des Testverfahrens gemäß dem ersten Aspekt der Erfindung. Ein Kern des zweiten Aspekts der Erfindung besteht darin, erst das Testverfahren durchzuführen und basierend auf dem durchgeführten Testverfahren zu entscheiden, ob das zum Testen verwendete oder ein anderes Chipmodul in der Fixierlage in der Kavität fixiert werden soll. Die im Testverfahren durchgefallenen Kartenkörper werden nicht zum Herstellungsverfahren gemäß dem zweiten Aspekt der Erfindung zugelassen, während nur die im Testverfahren bestandenen Kartenkörper das weitere Herstellungsverfahren durchlaufen. Das heißt, dass als Ausschuss des Herstellungsverfahrens nur Kartenkörper ohne Chipmodule, aber nicht mehr Kartenkörper mit Chipmodulen, anfallen. So lassen sich die durch Ausschuss bedingten Kosten senken.

Die vorliegende Erfindung wird nachfolgend mit Bezug auf die beiliegenden Zeichnungen beispielhaft beschrieben. Darin zeigen:
Figur 1 eine Draufsicht einer metallischen Kernschicht und eines in die Kavität der metallischen Kernschicht einzusetzenden Chipmoduls für eine kontaktlose oder Dual-Interface Chipkarte;
Figur 2 eine Querschnittsansicht eines Kartenkörpers für die kontaktlose oder Dual-Interface Chipkarte, wobei das Chipmodul mit einem Messkopf einer Testvorrichtung verbunden ist;
Figur 3 eine Querschnittsansicht des Kartenkörpers gemäß Figur 2, wobei das Chipmodul in der Kavität in einer Fixierlage positioniert ist;
Figur 4 Schritte eines Testverfahrens zum Testen der Funktionalität des Kartenkörpers;
Figur 5 eine Schwingungskurve, die den Zeitverlauf einer abklingenden Schwingung nach dem Anregen eines Schwingkreises des Chipmoduls darstellt;
Figur 6 Schritte eines Herstellungsverfahrens unter Einschluss des Testverfahrens gemäß Figur 4;
Figur 7A eine Draufsicht eines metallischen Mehrbenutzenbogens für eine Vielzahl von metallischen Kernschichten für eine entsprechende Vielzahl von kontaktlosen oder Dual-Interface-Chipkarten;
Figur 7B einen Ausschnitt einer metallischen Kernschicht aus Figur 7A mit einer Kavität für ein Chipmodul und eines daran angrenzenden Schlitzes, der bis zu einem Rand des Mehrbenuzenbogens heranreicht;
Figur 7C einen Ausschnitt einer anderen metallischen Kernschicht aus Figur 7A mit einer Kavität für ein Chipmodul und eines daran angrenzenden Schlitzes, der bis zu einer Schnittlinie heranreicht; und
Figur 8 Schritte eines Testverfahrens zum Testen der Funktionalität von aus dem Mehrbenutzenbogen gemäß Figur 7A herausgetrennten Kartenkörpern.

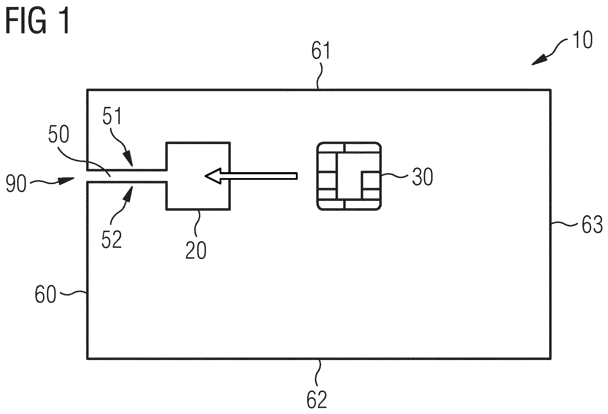

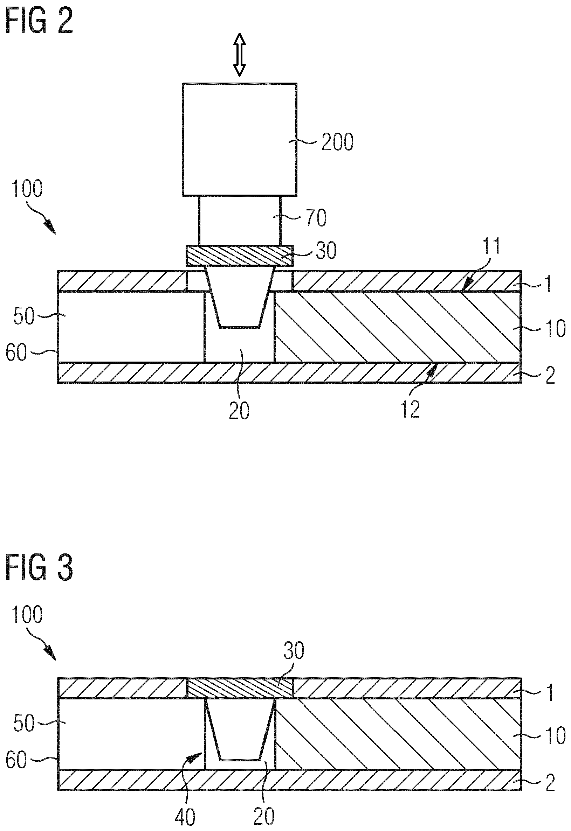

Figur 1 zeigt die Draufsicht einer metallischen Kernschicht 10 für eine kontaktlose oder Dual-Interface Chipkarte. Die metallische Kernschicht 10 umfasst eine Kavität 20 zum Fixieren eines Chipmoduls 30 in einer Fixierlage 40 (siehe Figur 3) in der Kavität 20 und einen Schlitz 50, der sich von der Kavität 20 bis zu einem Rand 60 der metallischen Kernschicht 10 erstreckt. Der Schlitz 50 weist über seine gesamte Länge eine durchgängige Öffnung 90 auf, in welcher sich somit die beiden Wände 51, 52 des Schlitzes 50 nicht kontaktieren. Alternativ kann sich der Schlitz 50 von der Kavität 20 zu einem der anderen drei Ränder 61, 62, 63 der metallischen Kernschicht 10 erstrecken. Abweichend von Figur 1 sind Länge, Tiefe, Breite, Form, Richtung und Winkellage zwischen dem Schlitz 50 und einem Rand 60, 61, 62, 63 der metallischen Kernschicht 10 sowie die Anzahl von Schlitzen je nach Bedarf veränderbar. Figur 1 zeigt ebenfalls in Draufsicht das in die Kavität einzusetzende Chipmodul 30, welches einen Schwingkreis mit einem Chip, vorzugsweise einen RFID- oder NFC-Chip, und einer Antennenspule, vorzugsweise eine induktiv koppelnde und planare Antennenspule mit mindestens einer Windung, umfasst.

Figur 2 zeigt die Querschnittsansicht eines Kartenkörpers 100, welcher die metallische Kernschicht 10 gemäß Figur 1 und zwei Deckschichten 1 und 2 umfasst. Die obere Seite 11 der metallischen Kernschicht 10 ist mit der Deckschicht 1 laminiert, während die untere Seite 12 der metallischen Kernschicht 10 mit der Deckschicht 2 laminiert ist. Alternativ können sich nur eine oder beide Deckschichten 1 und 2 auf nur einer der beiden Seiten 1 oder 2 der metallischen Kernschicht 10 befinden. Je nach Verwendungszweck sind die Anzahl, Position, Dicke und Material der Deckschichten veränderbar. Auf und/oder in den Deckschichten können noch Sicherheitsmerkmale und/oder individuelles Muster vorgesehen werden. Figur 2 zeigt auch das Chipmodul 30 gemäß Figur 1, welches mit einem Messkopf 70 einer Testvorrichtung 200 verbunden ist und mittels des Messkopfs 70 in oder über der Kavität 20 der metallischen Kernschicht 10 und der Deckschicht 1 positioniert wird. Von der Kavität 20 erstreckt sich der Schlitz 50 bis zum Rand 60 des Kartenkörpers 100 und ist dabei beidseitig von dem beidem Deckschichten 1 und 2 vollständig abgedeckt.

Figur 3 zeigt die Querschnittsansicht des Kartenkörpers 100 gemäß Figur 2, wobei das Chipmodul 30 hier in der Fixierlage 40 in der Kavität 20 positioniert ist.

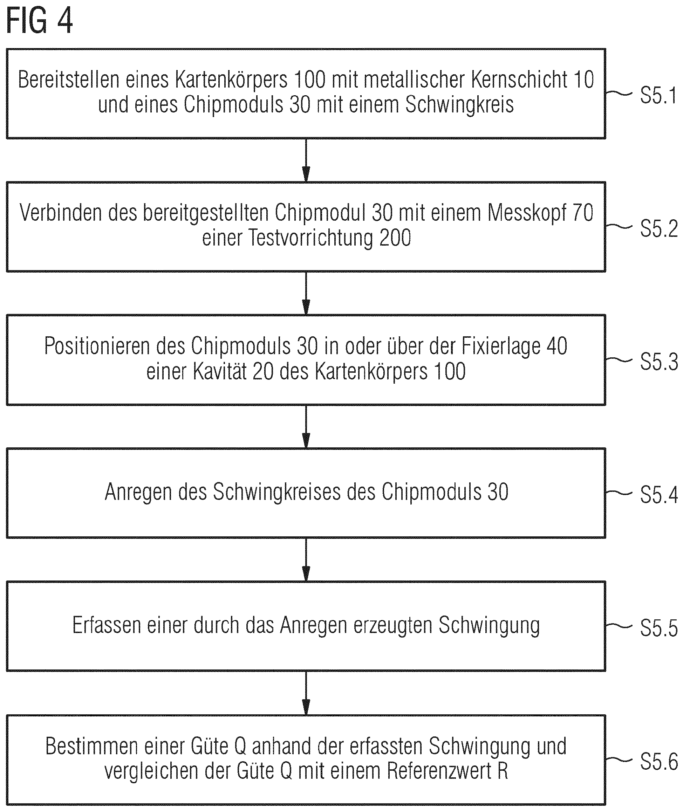

Figur 4 zeigt die Schritte des Verfahrens zum Testen der Funktionalität des Kartenkörpers 100, wenn das Chipmodul 30 gemäß Figur 3 in der Fixierlage 40 in der Kavität 20 oder in einem geringen Abstand von nicht mehr als 3 mm darüber (siehe Figur 2) positioniert ist. Die ersten drei Schritte S5.1 bis S5.3 gemäß Figur 4 entsprechen im Wesentlichen den Figuren 1 bis 3, d. h. zunächst werden der Kartenkörper 100 mit der metallischen Kernschicht 10 und das zum Testen verwendete oder ein anderes Chipmodul 30 bereitgestellt (S5.1), danach wird das bereitgestellte Chipmodul 30 mit dem Messkopf 70 der Testvorrichtung 200 verbunden (S5.2), und dann wird das verbundene Chipmodul 30 in oder über der Fixierlage 40 der Kavität 20 des Kartenkörpers 100 positioniert (S5.3). In den Schritten S5.4 bis S5.6 wird der Schwingkreis des so positionierten Chipmoduls 30 angeregt (S5.4) und die durch das Anregen erzeugte Schwingung mittels der Testvorrichtung 200 erfasst (S5.5). Die Testvorrichtung 200 kann dafür einen Oszillographen umfassen, welcher eine entsprechende Schwingungskurve, die den Zeitverlauf des abklingenden Stroms oder der abklingenden Spannung anzeigt und/ oder an der sich die einzelnen Werte des Stroms oder der Spannung ablesen lassen, darstellen kann. Letztlich wird im Schritt S5.6 eine Güte Q bestimmt und mit einem Referenzwert R verglichen.

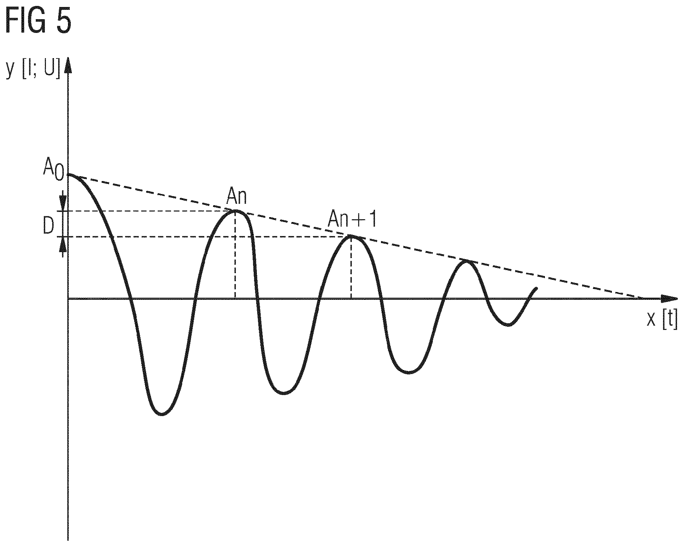

Figur 5 zeigt die mittels des Oszillographen dargestellte Schwingungskurve. Die horizontale Achse X und die vertikale Achse Y der Schwingungskurve entsprechen der Zeit t und dem Strom I oder der Spannung U des Schwingkreises des Chipmoduls 30. Wie bereits erwähnt, ist die erfasste Schwingung tatsächlich eine abklingende Schwingung. Das heißt, dass im Verlauf der Zeit t der Strom I oder die Spannung U des Schwingkreises einen generellen Abwärtstrend aufweist, und die Schwingungsamplitude An+1 einer nachfolgenden Phase immer kleiner als die Schwingungsamplitude An einer vorherigen Phase ist. Die ursprüngliche und maximale Schwingungsamplitude A0 der abklingenden Schwingung bedeutet den maximalen Strom oder die maximale Spannung des Schwingkreises, wenn der Schwingkreis des Chipmoduls 30 zu schwingen beginnt. Die Güte Q kann z. B. aus einer Differenz D zweier aufeinander folgender Schwingungsamplituden An und An+1 aus zwei aufeinander folgenden Phasen ermittelt werden.

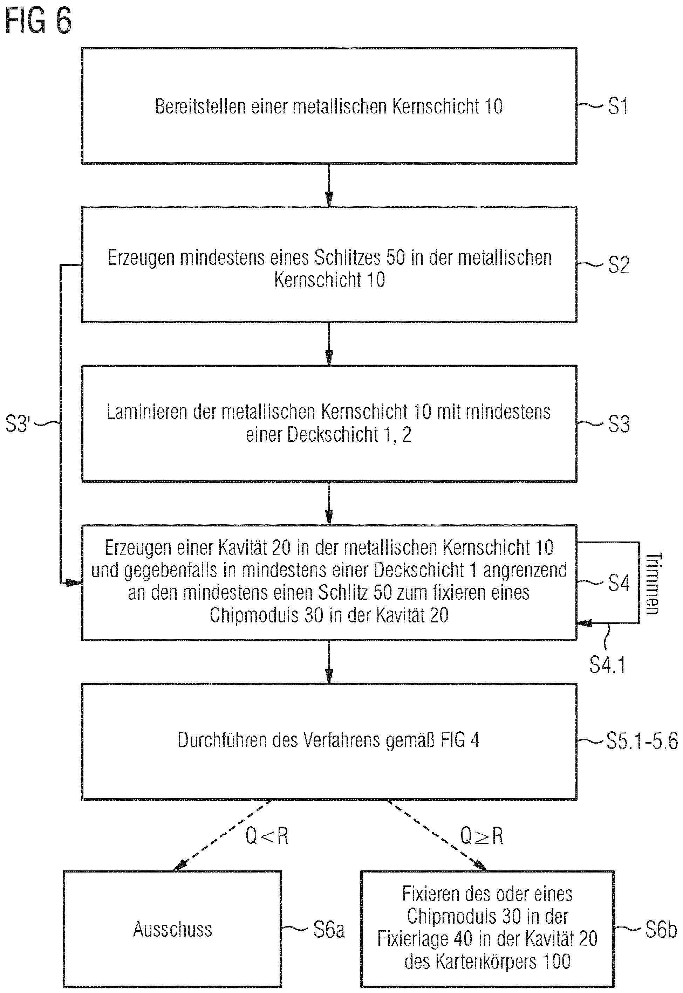

Figur 6 betrifft die Vorbereitung der metallischen Kernschicht 10 des Kartenkörpers 100 gemäß Figuren 1 und 2. Zunächst wird die metallische Kernschicht 10 bereitgestellt (S1), in der mindestens der Schlitz 50 erzeugt wird, der sich bis zum Rand 60, 61, 62, 63 der metallischen Kernschicht 10 erstreckt (S2). Die metallische Kernschicht 10 wird mit mindestens einer der beiden Deckschichten 1, 2 laminiert (S3). Anschließend wird die Kavität 20 in der metallischen Kernschicht 10 und in mindestens einer der Deckschichten 1, 2 erzeugt (S4). Wenn keine Deckschichten 1, 2 mit der metallischen Kernschicht 10 laminiert werden, wird die Kavität 20 nur in der metallischen Kernschicht 10 erzeugt (S3', S4). Die Kavität 20 wird dabei so erzeugt, dass sie an den mindestens einen Schlitz 50 angrenzt. Falls sich der Schlitz 50 nicht bis zum Rand 60, 61, 62, 63 der metallischen Kernschicht 10 erstreckt, wird der Kartenkörper 100 so getrimmt, dass sich der mindestens eine Schlitz 50 bis zum Rand 60, 61, 62, 63 der metallischen Kernschicht 10 erstreckt (S4.1). Anschließend werden die Schritte S5.1 bis S5.6 gemäß dem Testverfahren nach Figur 4 durchgeführt. Als Ergebnis ist die Güte Q entweder kleiner als der Referenzwert R und der Kartenkörper ist Ausschuss, wie im Schritt S 6a der Figur 6 gezeigt, oder die Güte Q ist mindestens so groß wie der Referenzwert R und das zum Testen verwendete Chipmodul 30 oder ein anderes Chipmodul 30 wird in der Fixierlage 40 in der Kavität 20 fixiert, wie im Schritt 6b der Figur 6 gezeigt.

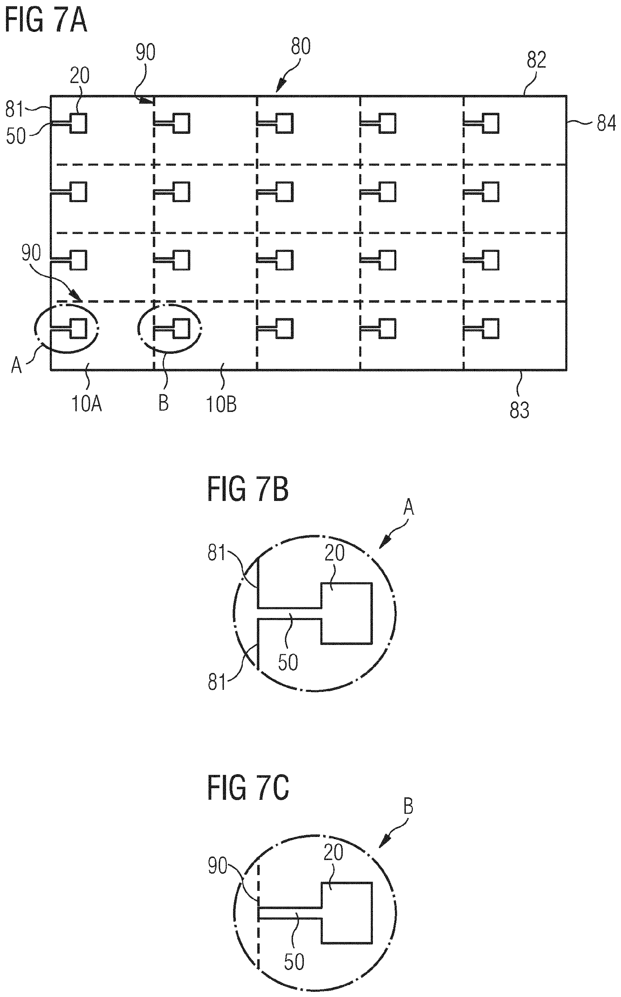

Figur 7A zeigt die Draufsicht eines metallischen Mehrbenutzenbogens 80 mit einer Vielzahl von metallischen Kernschichten 10A, 10B für eine entsprechende Vielzahl von kontaktlosen oder Dual-Interface-Chipkarten. Jede metallische Kernschicht 10 der Vielzahl von metallischen Kernschichten 10A, 10B umfasst mindestens einen Schlitz 50 und eine Kavität 20. Der Mehrbenutzenbogen 80 eine viereckige Form mit jeweils zwei gegenüberliegenden Rändern 82, 83 und 81, 84. Darüber hinaus weist der Mehrbenutzenbogen 80 eine Vielzahl von Schnittlinien 90 auf, entlang der die Vielzahl von metallischen Kernschichten 10A, 10B aus dem Mehrbenutzenbogen 80 herausgetrennt werden. Die Schnittlinien 90, die entweder parallel zu den Rändern 82, 83 des Mehrbenutzenbogens 80 oder parallel zu den Rändern 81, 84 des Mehrbenutzenbogens 80 sind, können sichtbare und/oder virtuelle Linien sein. Abweichend von Figur 7A ist die Anzahl der Vielzahl der metallischen Kernschichten 10A, 10B je nach Bedarf veränderbar.

Die Figuren 7B und 7C zeigen jeweils einen Ausschnitt A bzw. B zweier verschiedener metallischer Kernschichten 10A, 10B des Mehrbenutzenbogens 80, wobei die erste metallische Kernschicht 10A mit ihrem Schlitz 50 an einen der Ränder 81, 82, 83, 84 des Mehrbenutzenbogens 80 angrenzt, während die zweite metallische Kernschicht 10B nicht mit ihrem Schlitz 50 an einen der Ränder 81, 82, 83, 84, sondern stattdessen an eine der Schnittlinien 90 des Mehrbenutzenbogens 80 angrenzt.

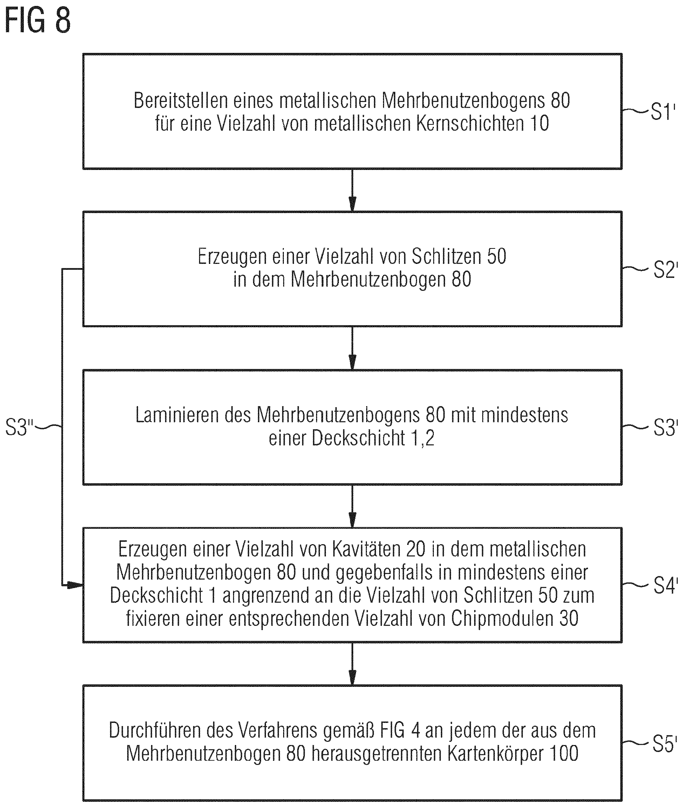

Figur 8 zeigt ein Verfahren zum Testen der Funktionalität von aus dem Mehrbenutzenbogen 80 gemäß Figur 7A herausgetrennten Kartenkörpern 100. Zunächst wird der metallische Mehrbenutzenbogen 80 mit der Vielzahl von metallischen Kernschichten 10A, 10B (S1') bereitgestellt und danach wird eine entsprechende Vielzahl von Schlitzen 50 in dem Mehrbenutzenbogen 80 erzeugt (S2'). Der metallische Mehrbenutzenbogen 80 kann mit mindestens einer Deckschicht 1, 2 laminiert werden (S3'), wie zuvor anhand eines einzelnen Kartenkörpers 100 beschrieben, und anschließend wird eine entsprechende Vielzahl von Kavitäten 20 in mindestens einer der Deckschichten 1, 2 und in dem metallischen Mehrbenutzenbogen 80 erzeugt (S4'). Wenn keine Deckschichten 1, 2 mit dem metallischen Mehrbenutzenbogen 80 laminiert werden, wird die Vielzahl von Kavitäten 20 nur in dem Mehrbenutzenbogen 80 erzeugt (S3", S4'). Vorzugsweise weist jede metallische Kernschicht 10 der Vielzahl von metallischen Kernschichten 10A, 10B des metallischen Mehrbenutzenbogens 80 mindestens einen Schlitz 50 und eine Kavität 20 auf, die so erzeugt werden, dass sich der Schlitz 50 von der Kavität 20 bis zu entweder einem Rand 81, 82, 83, 84 des metallischen Mehrbenutzenbogens 80, wie in Figur 7B gezeigt, oder zu einer Schnittlinie 90 des metallischen Mehrbenutzenbogens 80, wie in Figur 7C gezeigt, erstreckt. Letztlich werden die Schritte S5.1 bis S5.6 gemäß Figur 4 an jedem aus dem Mehrbenutzenbogen 80 herausgetrennten Kartenkörper 100 durchgeführt.

## Patentansprüche

1. Verfahren zum Testen eines Kartenkörpers (100) mit einer metallischen Kernschicht (10) für eine kontaktlose oder eine Dual-Interface Chipkarte, umfassend die Schritte:
- Bereitstellen der metallischen Kernschicht (10) mit einer Kavität (20) zum Fixieren eines Chipmoduls (30) in einer Fixierlage (40) in der Kavität (20) und mit mindestens einem Schlitz (50), der sich von der Kavität (20) bis zu einem Rand (60, 61, 62, 63) der metallischen Kernschicht (10) erstreckt;
- Bereitstellen des oder eines Chipmoduls (30) mit einem Schwingkreis, welcher einen Chip und eine mit dem Chip gekoppelte Antennenspule umfasst;
- Positionieren des bereitgestellten Chipmoduls (30) in der Kavität (20) in oder über der Fixierlage (40); und
- Testen des Schwingkreises des positionierten Chipmoduls (30) vor einem Fixieren des Chipmoduls (30) in der Kavität (20), wobei das Chipmodul (30) über der Fixierlage (40) bis zu einem Abstand von 3 mm relativ zur Fixierlage (40) positioniert wird.

2. Verfahren nach Anspruch 1, wobei der Schritt des Positionierens folgenden Teilschritt umfasst:
- Verbinden des Chipmoduls (30) mit einem Messkopf (70) einer Testvorrichtung (200).

3. Verfahren nach Anspruch 2, wobei das Chipmodul (30) beim Schritt des Positionierens mittels des Messkopfs (70) positioniert wird.

4. Verfahren nach einem der Ansprüche 1 bis 3, wobei der Schritt des Testens folgende Teilschritte umfasst:
- Anregen des Schwingkreises mittels der Testvorrichtung (200); und
- Erfassen einer durch das Anregen erzeugten Schwingung des Schwingkreises.

5. Verfahren nach Anspruch 4, wobei der Schritt des Anregens durch induktive Anregung mittels eines gepulsten Magnetfelds erfolgt.

6. Verfahren nach Anspruch 5, wobei das gepulste Magnetfeld durch einen einzelnen Strompuls erzeugt wird, vorzugsweise durch einen Gleichstrompuls in Form eines Dirac-Stoßes.

7. Verfahren nach einem der Ansprüche 4 bis 6, wobei beim Schritt des Erfassens ein Abklingen der Schwingung erfasst wird.

8. Verfahren nach Anspruch 7, wobei der Schritt des Erfassens folgende Teilschritte umfasst:
- Bestimmen einer Güte Q anhand des Abklingens der Schwingung und vorzugsweise Vergleichen der Güte Q mit einem Referenzwert.

9. Verfahren nach einem der Ansprüche 1 bis 8, wobei der Schritt des Bereitstellens der metallischen Kernschicht (10) die Teilschritte umfasst:
- Bereitstellen der metallischen Kernschicht (10);
- Erzeugen des mindestens einen Schlitzes (50) in der metallischen Kernschicht (10);
- Laminieren der metallischen Kernschicht (10) mit mindestens einer Deckschicht (1, 2);
- Erzeugen der Kavität (20) in der mindestens einen Deckschicht (1, 2) und der metallischen Kernschicht (10), sodass der mindestens eine Schlitz (50) an die Kavität (20) angrenzt; und
- falls sich der mindestens eine Schlitz (50) nicht bis zu einem Rand (60, 61, 62, 63) der metallischen Kernschicht (10) erstreckt, Trimmen der laminierten metallischen Kernschicht (10) so, dass sich der mindestens eine Schlitz (50) bis zu einem Rand (60, 61, 62, 63) der metallischen Kernschicht (10) erstreckt.

10. Verfahren nach einem der Ansprüche 1 bis 8, wobei der Schritt des Bereitstellens der metallischen Kernschicht (10) die Teilschritte umfasst:
- Bereitstellen eines metallischen Mehrbenutzenbogens (80) für eine Vielzahl von kontaktlosen oder Dual-Interface Chipkarten, wobei der metallische Mehrbenutzenbogen (80) eine entsprechende Vielzahl von metallischen Kernschichten umfasst;
- Erzeugen einer Vielzahl von Schlitzen in dem metallischen Mehrbenutzenbogen (80), sodass jede metallische Kernschicht (10) der Vielzahl von metallischen Kernschichten des metallischen Mehrbenutzenbogens (80) mindestens einen Schlitz (50) umfasst;
- Erzeugen einer Vielzahl von Kavitäten in dem metallischen Mehrbenutzenbogen (80) zum Fixieren einer entsprechenden Vielzahl von Chipmodulen darin, wobei jede metallische Kernschicht (10) der Vielzahl von metallischen Kernschichten des metallischen Mehrbenutzenbogens (80) eine Kavität (20) umfasst und bei jeder metallischen Kernschicht (10) der mindestens eine Schlitz (50) sich von der entsprechenden Kavität (20) entweder zu einem Rand (81, 82, 83, 84) des metallischen Mehrbenutzenbogens (80) oder zu mindestens einer Schnittlinie (90) erstreckt, entlang der die metallische Kernschicht aus dem metallischen Mehrbenutzenbogen (80) herausgetrennt werden wird; und
- Heraustrennen der Vielzahl von metallischen Kernschichten aus dem metallischen Mehrbenutzenbogen (80).

11. Verfahren nach Anspruch 10, wobei der Schritt des Bereitstellens der metallischen Kernschicht (10) die weiteren Teilschritte umfasst:
- Laminieren des metallischen Mehrbenutzenbogens (80) mit mindestens einer Deckschicht;
- Erzeugen einer Vielzahl von Kavitäten in der mindestens einen Deckschicht und dem metallischen Mehrbenutzenbogen (80) zum Fixieren einer entsprechenden Vielzahl von Chipmodulen darin.

12. Verfahren zum Herstellen einer kontaktlosen oder einer Dual-Interface Chipkarte, umfassend folgende Schritte:
- Durchführen des Verfahrens nach einem der Ansprüche 1 bis 12; und später
- Fixieren des oder eines Chipmoduls (30) in der Fixierlage (40) in der Kavität (20).

13. Verfahren nach einem der Ansprüche 1 bis 12, wobei die Antennenspule eine induktiv koppelnde Antennenspule ist, vorzugsweise mit mindestens einer Windung.

14. Verfahren nach einem der Ansprüche 1 bis 13, wobei der Chip ein RFID- oder ein NFC-Chip ist.

## Claims

1. Method for testing a card body (100) with a metallic core layer (10) for a contactless or a dual-interface chip card, comprising the steps: providing the metallic core layer (10) with a cavity (20) for fixing a chip module (30) in a fixing position (40) in the cavity (20) and with at least one slit (50) that extends from the cavity (20) to an edge (60, 61, 62, 63) of the metallic core layer (10); providing the or a chip module (30) with an oscillating circuit, which comprises a chip and an antenna coil coupled to the chip; positioning the provided chip module (30) in the cavity (20) in or above the fixing position (40); and testing the oscillating circuit of the positioned chip module (30) before fixing the chip module (30) in the cavity (20), wherein the chip module (30) is positioned above the fixing position (40) up to a distance of 3 mm relative to the fixing position (40).

2. Method according to claim 1, wherein the step of positioning comprises the following sub-step: connecting the chip module (30) to a probe (70) of a test device (200).

3. Method according to claim 2, wherein the chip module (30) is positioned during the step of positioning by means of the probe (70).

4. Method according to one of claims 1 to 3, wherein the step of testing comprises the following sub-steps: exciting the oscillating circuit by means of the test device (200); and detecting an oscillation of the oscillating circuit generated by the exciting.

5. Method according to claim 4, wherein the step of exciting is performed by inductive excitation by means of a pulsed magnetic field.

6. Method according to claim 5, wherein the pulsed magnetic field is generated by a single current pulse, preferably by a direct current pulse in the form of a Dirac impulse.

7. Method according to one of claims 4 to 6, wherein during the step of detecting, a decay of the oscillation is detected.

8. Method according to claim 7, wherein the step of detecting comprises the following sub-steps: determining a quality factor Q on the basis of the decay of the oscillation and preferably comparing the quality factor Q with a reference value.

9. Method according to one of claims 1 to 8, wherein the step of providing the metallic core layer (10) comprises the sub-steps: providing the metallic core layer (10); generating the at least one slit (50) in the metallic core layer (10); laminating the metallic core layer (10) with at least one cover layer (1, 2); generating the cavity (20) in the at least one cover layer (1, 2) and the metallic core layer (10), so that the at least one slit (50) adjoins the cavity (20); and if the at least one slit (50) does not extend to an edge (60, 61, 62, 63) of the metallic core layer (10), trimming the laminated metallic core layer (10) such that the at least one slit (50) extends to an edge (60, 61, 62, 63) of the metallic core layer (10).

10. Method according to one of claims 1 to 8, wherein the step of providing the metallic core layer (10) comprises the sub-steps: providing a metallic multiple-use sheet (80) for a plurality of contactless or dual-interface chip cards, wherein the metallic multiple-use sheet (80) comprises a corresponding plurality of metallic core layers; generating a plurality of slits in the metallic multiple-use sheet (80), so that each metallic core layer (10) of the plurality of metallic core layers of the metallic multiple-use sheet (80) comprises at least one slit (50); generating a plurality of cavities in the metallic multiple-use sheet (80) for fixing a corresponding plurality of chip modules therein, wherein each metallic core layer (10) of the plurality of metallic core layers of the metallic multiple-use sheet (80) comprises a cavity (20), and in each metallic core layer (10) the at least one slit (50) extends from the corresponding cavity (20) either to an edge (81, 82, 83, 84) of the metallic multiple-use sheet (80) or to at least one cutting line (90) along which the metallic core layer will be separated from the metallic multiple-use sheet (80); and separating the plurality of metallic core layers from the metallic multiple-use sheet (80).

11. Method according to claim 10, wherein the step of providing the metallic core layer (10) comprises the further sub-steps: laminating the metallic multiple-use sheet (80) with at least one cover layer; generating a plurality of cavities in the at least one cover layer and the metallic multiple-use sheet (80) for fixing a corresponding plurality of chip modules therein.

12. Method for manufacturing a contactless or a dual-interface chip card, comprising the following steps: carrying out the method according to one of claims 1 to 11; and subsequently fixing the or a chip module (30) in the fixing position (40) in the cavity (20).

13. Method according to one of claims 1 to 12, wherein the antenna coil is an inductively coupling antenna coil, preferably with at least one winding.

14. Method according to one of claims 1 to 13, wherein the chip is an RFID or an NFC chip.

## Revendications

1. Procédé de test d'un corps de carte (100) avec une couche centrale métallique (10) pour une carte à puce sans contact ou à double interface, comprenant les étapes suivantes : mise à disposition de la couche centrale métallique (10) avec une cavité (20) pour la fixation d'un module de puce (30) dans une position de fixation (40) dans la cavité (20) et avec au moins une fente (50) qui s'étend de la cavité (20) jusqu'à un bord (60, 61, 62, 63) de la couche centrale métallique (10) ; mise à disposition du ou d'un module de puce (30) avec un circuit oscillant comprenant une puce et une bobine d'antenne couplée à la puce ; positionnement du module de puce (30) mis à disposition dans la cavité (20) dans ou au-dessus de la position de fixation (40) ; et test du circuit oscillant du module de puce (30) positionné avant une fixation du module de puce (30) dans la cavité (20), le module de puce (30) étant positionné au-dessus de la position de fixation (40) jusqu'à une distance de 3 mm par rapport à la position de fixation (40).

2. Procédé selon la revendication 1, dans lequel l'étape de positionnement comprend la sous-étape suivante : connexion du module de puce (30) à une tête de mesure (70) d'un dispositif de test (200).

3. Procédé selon la revendication 2, dans lequel le module de puce (30) est positionné lors de l'étape de positionnement au moyen de la tête de mesure (70).

4. Procédé selon l'une des revendications 1 à 3, dans lequel l'étape de test comprend les sous-étapes suivantes : excitation du circuit oscillant au moyen du dispositif de test (200) ; et enregistrement d'une oscillation du circuit oscillant générée par l'excitation.

5. Procédé selon la revendication 4, dans lequel l'étape d'excitation s'effectue par excitation inductive au moyen d'un champ magnétique pulsé.

6. Procédé selon la revendication 5, dans lequel le champ magnétique pulsé est généré par une impulsion de courant unique, de préférence par une impulsion de courant continu sous la forme d'un choc de Dirac.

7. Procédé selon l'une des revendications 4 à 6, dans lequel lors de l'étape d'enregistrement, une décroissance de l'oscillation est enregistrée.

8. Procédé selon la revendication 7, dans lequel l'étape d'enregistrement comprend les sous-étapes suivantes : détermination d'un facteur de qualité Q à partir de la décroissance de l'oscillation et, de préférence, comparaison du facteur de qualité Q avec une valeur de référence.

9. Procédé selon l'une des revendications 1 à 8, dans lequel l'étape de mise à disposition de la couche centrale métallique (10) comprend les sous-étapes suivantes : mise à disposition de la couche centrale métallique (10) ; génération de l'au moins une fente (50) dans la couche centrale métallique (10) ; laminage de la couche centrale métallique (10) avec au moins une couche de recouvrement (1, 2) ; génération de la cavité (20) dans l'au moins une couche de recouvrement (1, 2) et dans la couche centrale métallique (10), de sorte que l'au moins une fente (50) soit adjacente à la cavité (20) ; et, si l'au moins une fente (50) ne s'étend pas jusqu'à un bord (60, 61, 62, 63) de la couche centrale métallique (10), rognage de la couche centrale métallique (10) laminée de sorte que l'au moins une fente (50) s'étende jusqu'à un bord (60, 61, 62, 63) de la couche centrale métallique (10).

10. Procédé selon l'une des revendications 1 à 8, dans lequel l'étape de mise à disposition de la couche centrale métallique (10) comprend les sous-étapes suivantes : mise à disposition d'une feuille à usages multiples métallique (80) pour une pluralité de cartes à puce sans contact ou à double interface, la feuille à usages multiples métallique (80) comprenant une pluralité correspondante de couches centrales métalliques ; génération d'une pluralité de fentes dans la feuille à usages multiples métallique (80), de sorte que chaque couche centrale métallique (10) de la pluralité de couches centrales métalliques de la feuille à usages multiples métallique (80) comprenne au moins une fente (50) ; génération d'une pluralité de cavités dans la feuille à usages multiples métallique (80) pour la fixation d'une pluralité correspondante de modules de puce, chaque couche centrale métallique (10) de la pluralité de couches centrales métalliques de la feuille à usages multiples métallique (80) comprenant une cavité (20) et, pour chaque couche centrale métallique (10), l'au moins une fente (50) s'étendant depuis la cavité (20) correspondante soit jusqu'à un bord (81, 82, 83, 84) de la feuille à usages multiples métallique (80), soit jusqu'à au moins une ligne de coupe (90) le long de laquelle la couche centrale métallique sera séparée de la feuille à usages multiples métallique (80) ; et séparation de la pluralité de couches centrales métalliques de la feuille à usages multiples métallique (80).

11. Procédé selon la revendication 10, dans lequel l'étape de mise à disposition de la couche centrale métallique (10) comprend les sous-étapes supplémentaires suivantes : laminage de la feuille à usages multiples métallique (80) avec au moins une couche de recouvrement ; génération d'une pluralité de cavités dans l'au moins une couche de recouvrement et dans la feuille à usages multiples métallique (80) pour la fixation d'une pluralité correspondante de modules de puce.

12. Procédé de fabrication d'une carte à puce sans contact ou à double interface, comprenant les étapes suivantes : mise en œuvre du procédé selon l'une des revendications 1 à 11 ; et fixation ultérieure du ou d'un module de puce (30) dans la position de fixation (40) dans la cavité (20).

13. Procédé selon l'une des revendications 1 à 12, dans lequel la bobine d'antenne est une bobine d'antenne à couplage inductif, de préférence avec au moins un enroulement.

14. Procédé selon l'une des revendications 1 à 13, dans lequel la puce est une puce RFID ou une puce NFC.
